# EUROPÄISCHE PATENTSCHRIFT

(11) **EP 2 805 603 B1**
(45) Veröffentlichungstag und Bekanntmachung des Hinweises auf die Patenterteilung: **11.01.2017**
(21) Anmeldenummer: 13002675.0
(22) Anmeldetag: 22.05.2013
(51) Int. Cl.: A01F 29/09, A01D 43/10

(54) **Vorrichtung und Verfahren zur Überwachung der Schneidenschärfe**
Device and method for monitoring cutting sharpness
Dispositif et procédé de surveillance du tranchant d'une lame

(43) Veröffentlichungstag der Anmeldung: 26.11.2014
(73) Patentinhaber: CLAAS E-Systems KGaA mbH & Co KG, 33330 Gütersloh (DE)
(72) Erfinder: Madsen, Tommy Ertbolle, 2830 Virum (DK); Kildeby, Allan Reinhold, 3060 Esperade (DK); Huster, Jochen, D - 3333 Gütersloh (DE)
(74) Vertreter: Heuer, Wilhelm

(56) Entgegenhaltungen:
- EP-A1- 2 008 508
- EP-A1- 2 329 705
- EP-A2- 1 522 214
- DD-A1- 109 260

## Beschreibung

Die vorliegende Erfindung betrifft eine Vorrichtung zur Überwachung der Schneidenschärfe eines Messers, insbesondere eines rotierenden Messers an einer Messertrommel einer Erntemaschine wie etwa eines Feldhäckslers, einer Ballenpresse oder dergleichen.

Aus EP 1 522 214 D1 ist eine Vorrichtung zur Überwachung der Schneidenschärfe eines Messers bekannt, die eine Lichtquelle zum Beleuchten des Messers, eine Kamera zum Aufnehmen von Bildern des von der Lichtquelle beleuchteten Messers und eine Überwachungseinrichtung umfasst, in der die Bilder der Kamera einer Bildverarbeitung unterzogen werden, um die Schärfe der Schneiden des Messers durch Vergleich mit einer Sollform zu beurteilen. Die Blickrichtung der Kamera ist im Wesentlichen radial zur Achse der die Messer tragenden Trommel orientiert, so dass die zur Kamera hin vorspringende Schneide des Messers in den Bildern der Kamera im Wesentlichen nur als eine dünne Linie zwischen zwei jeweils Flanken des Messers entsprechenden Flächen erscheint. Ein Stumpfwerden der Schneide beeinflusst nicht die Form, mit der das Messer in den Bildern der Kamera erscheint, sondern lediglich die Breite der Linie zwischen den beiden Flanken. Dies macht eine präzise Beurteilung der Schneidenschärfe schwierig.

Aufgabe der vorliegenden Erfindung ist, eine Vorrichtung der oben beschriebenen Art so weiterzubilden, dass eine sichere und zuverlässige Beurteilung der Schneidenschärfe mit einfachen Mitteln möglich ist.

Die Aufgabe wird zum einen gelöst, indem bei einer Vorrichtung zur Überwachung der Schneidenschärfe eines Messers mit einer Lichtquelle zum Beleuchten des Messers und einer Kamera zum Aufnehmen von Bildern des Messers die Lichtquelle eingerichtet ist, wenigstens eine im Blickfeld der Kamera die Schneide des Messers kreuzende Referenzlinie zu projizieren, und die Referenzlinie zur Generierung eines Maßes für die Schneidenschärfe ausgewertet wird. Die Referenzlinie folgt der Kontur des Messers und weist daher im Bereich der Schneide eine Krümmung auf, die unmittelbar zusammenhängt mit dem Krümmungsradius und folglich mit der Schärfe der Schneide. Indem der Verlauf der Referenzlinie in den von der Kamera gelieferten Bildern untersucht wird, kann daher die Schärfe der Schneide zuverlässig quantitativ beurteilt werden.

Einer bevorzugten Ausgestaltung zufolge ist die Referenzlinie eine beiderseits von unbeleuchteten Bereichen flankierte beleuchtete Linie. Eine solche Referenzlinie kann z.B. projiziert werden, indem Licht der Lichtquelle durch eine schlitzförmige Blende hindurchtritt.

Als Referenzlinie kann auch eine scharfe Grenze zwischen einem beleuchteten und einem unbeleuchteten Bereich des Messers dienen; eine solche Grenze kann z.B. durch Abschatten eines Teils des Lichts der Lichtquelle an einer vorzugsweise geraden Kante erhalten werden.

Die Referenzlinie in Form einer beleuchteten Linie kann ferner vorteilhaft erhalten werden, indem auf dem Weg des Lichts von der Lichtquelle zum Messer ein zylindrisches optisches Element wie etwa eine Zylinderlinse oder ein Zylinderspiegel oder ein rotierendes optisches Element angeordnet ist. Wenn die Lichtquelle einen breit gefächerten Lichtkegel erzeugt, z.B. im Falle einer Glühfaden-Lichtquelle, kann das zylindrische optische Element zum Fokussieren des Lichtkegels auf den linienförmig beleuchteten Bereich dienen.

Einer bevorzugten Ausgestaltung zufolge erzeugt die Lichtquelle einen scharf gebündelten Strahl; dann kann das zylindrische optische Element die Referenzlinie projizieren, indem es den gebündelten Strahl in einer Ebene auffächert.

Mit Hilfe eines rotierenden optischen Elements kann die Referenzlinie im Laufe eines Beobachtungszeitraums projiziert werden, indem der gebündelte Strahl der Lichtquelle über das Messerbewegt wird. Es ist nicht erforderlich, dass die Referenzlinie zu irgendeinem Zeitpunkt in ihrer Gänze sichtbar ist; es genügt für die Zwecke der Erfindung, wenn der gebündelte Strahl im Laufe einer Drehung des rotierenden Elements die Referenzlinie nach und nach auf das Messer zeichnet.

Insbesondere zur Erzeugung eines scharf gebündelten Lichtstrahls ist ein Laser als Lichtquelle geeignet.

Um Schärfemessungen an einem bewegten Messer vornehmen zu können, ist es zweckmäßig, wenn die Kamera mit kurzen Verschlusszeiten arbeiten kann.

Wenn die Lichtquelle außerhalb von Verschlusszeiten der Kamera Licht erzeugt, kann es nicht für die Schärfemessung genutzt werden. Für einen energieeffizienten Betrieb ist es daher zweckmäßig, wenn die Lichtquelle gepulst ist. Eine gepulste Lichtquelle ermöglicht darüber hinaus eine Messung am bewegten Messer selbst dann, wenn die Verschlusszeiten der Kamera lang gegenüber der Pulsdauer der Lichtquelle und zu lang zum Einfrieren der Messerbewegung sind.

Wenn das Messer in bei Erntemaschinen üblicher Weise an einer rotierenden Trommel montiert ist, wird zweckmäßigerweise eine Triggereinrichtung zum Synchronisieren des Betriebs der Kamera und/oder der gepulsten Lichtquelle an die Drehung der Trommel gekoppelt sein. So können Bilder erhalten werden, in denen die Position der Schneide reproduzierbar und vorhersagbar ist. Dies vereinfacht für eine nachgeschaltete Bildverarbeitungseinrichtung die Suche nach der Schneide in den von der Kamera gelieferten Bildern und verringert so den Verarbeitungsaufwand.

Die Lichtquelle und die Kamera sind vorzugsweise an einem entlang der Schneide verfahrbaren Träger montiert. Durch Verfahren des Trägers kann die Referenzlinie entlang der Schneide des Messers verschoben werden, und die Schneidenschärfe kann für zahlreiche Punkte der Schneide ermittelt werden. Indem Messwerte der Schneidenschärfe für verschiedene Punkte einer Schneide (oder von mehreren Schneiden einer gleichen Trommel) gemittelt werden, kann eine fehlerhafte Beurteilung vermieden werden, die sich z.B. ergäbe, wenn die Messung allein an einer Scharte des Messers erfolgt.

Die Triggereinrichtung kann zweckmäßigerweise an demselben Träger wie die Lichtquelle und die Kamera montiert sein, um zusammen mit diesem entlang der Schneide verfahrbar zu sein. So kann sichergestellt werden, dass sich die Schneide des Messers in den von der Kamera gelieferten Bildern immer an derselben Stelle befindet, auch wenn das Messer windschief zur Trommelachse orientiert ist.

Die Lichtquelle und/oder die Kamera sind vorzugsweise in einem mit Druckgas beaufschlagbaren Gehäuse untergebracht. Indem das Druckgas aus dem Gehäuse, insbesondere in Richtung des zu untersuchenden Messers, ausströmt, kann das Vordringen von Schneidgut in das Gehäuse und eine Verunreinigung der optischen Oberflächen von Lichtquelle und/oder Kamera durch das Schneidgut verhindert oder zumindest begrenzt werden.

In gleicher Weise kann ein bewegliches Verschlusselement, das zwischen Lichtquelle und Messer und/oder zwischen Kamera und Messer platzierbar ist, die Verschmutzung der optischen Oberflächen von Lichtquelle und Kamera begrenzen.

Damit die Krümmung der Referenzlinie an der Schneide in den von der Kamera gelieferten Bildern deutlich sichtbar wird, sollten die Einfallsrichtung, aus der das Licht der Lichtquelle auf die Schneide trifft, und die Blickrichtung der Kamera einen Winkel von wenigstens 45° und höchstens 135°, vorzugsweise zwischen 60° und 90°, aufspannen.

Die Aufgabe wird ferner gelöst durch ein Verfahren zum Überwachen der Scheidenschärfe eines Messers mit den Schritten:
- Projizieren wenigstens einer Referenzlinie auf das Messer, die die Schneide des Messers kreuzt,
- Aufnehmen eines Bildes der Referenzlinie,
- Abschätzen der Schneidenschärfe anhand der Gestalt der Referenzlinie im aufgenommenen Bild.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Feldhäckslers als Beispiel einer erfindungsgemäßen Erntemaschine;
- Fig. 2: eine perspektivische Ansicht einer Häckseltrommel und einer daran angeordneten Vorrichtung zur Überwachung der Schneidenschärfe gemäß der Erfindung;
- Fig. 3: eine schematische Ansicht eines Messers aus der Perspektive einer Kamera der Vorrichtung zur Schneidenschärfeüberwachung;
- Fig. 4: ein Beispiel eines von der Kamera der Vorrichtung zur Schneidenschärfeüberwachung gelieferten Bildes; und
- Fig. 5: einen schematischen Schnitt durch eine entlang eines zu untersuchenden Messers bewegbare Vorrichtung zur Überwachung der Schneidenschärfe..

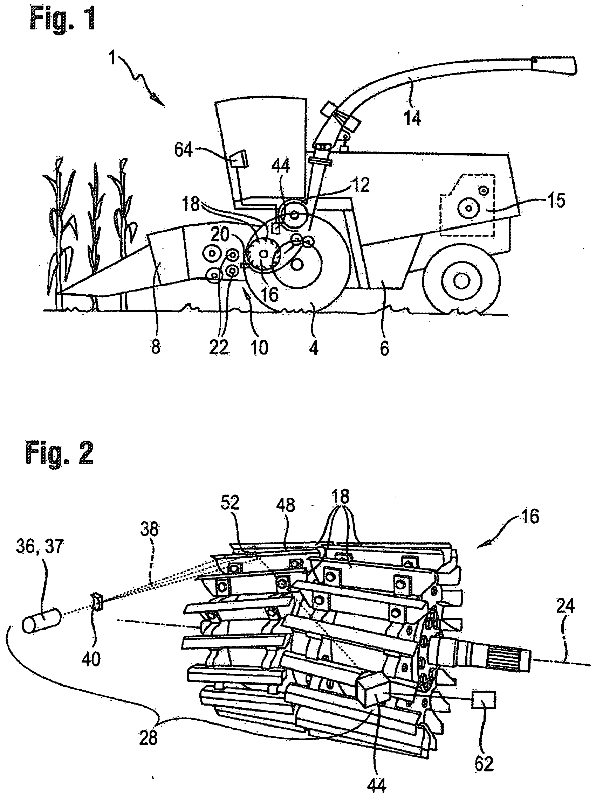

Fig. 1 zeigt einen Feldhäcksler 1 mit einer Vorrichtung zur Schneidenschärfeüberwachung gemäß der vorliegenden Erfindung. Der Feldhäcksler 1 ist ausgestattet mit einem Fahrwerk 4, einem Fahrzeugrahmen 6, einem vorne am Fahrzeugrahmen 6 montierten Aufnahmevorsatz 8, der zum Aufnehmen von Erntegut vom Boden und zum Einspeisen desselben in einen Förderkanal dient, sowie, innerhalb des Rahmens 6, mit einem Häckselwerk 10, einem Nachbeschleuniger 12 und einem Auswurfkrümmer 14, die nacheinander an dem Förderkanal angeordnet sind, sowie mit einem Motor 15 zum Antrieb des Fahrwerks 4 sowie der beweglichen Teile des Aufnahmevorsatzes 8, des Häckselwerks 10 und des Nachbeschleunigers 12.

Der Aufnahmevorsatz 8 des Feldhäckslers 1 ist austauschbar. In Fig. 1 ist der Aufnahmevorsatz 8 ein Maisgebiss. An seiner Stelle können andere Typen von Vorsätzen, z.B. zum Mähen stehender Grünpflanzen oder zum Aufsammeln von in Schwaden liegendem Heu, montiert werden.

Das Häckselwerk 10 umfasst eine drehangetriebene Häckseltrommel 16, die mit gleichmäßig über ihren Umfang verteilten Häckselmessern 18 besetzt ist. Die rotierenden Häckselmesser 18 bilden zusammen mit einer ortfesten Gegenschneide 20 einen Schneidspalt, in dem mit Hilfe von Förderwalzen 22 zugeführtes Erntegut zerkleinert wird.

Wie in der perspektivischen Ansicht der Häckseltrommel 16 in Fig. 2 zu erkennen, erstrecken sich die Häckselmesser 18 jeweils nur über eine linke bzw. eine rechte Hälfte der Häckseltrommel 16 und sind an einer Mittelebene der Häckseltrommel 16 jeweils um einen halben Messerabstand in Umfangsrichtung gegeneinander versetzt. Außerdem sind die Schneiden 48 der Häckselmesser 18 in Bezug auf eine Drehachse 24 der Häckseltrommel 16 windschief ausgerichtet, so dass im Laufe der Drehung der Häckseltrommel 16 die Punkte, an denen die Häckselmesser 18 und die ortfeste Gegenschneide 20 einander kreuzen, sich in axialer Richtung bewegen. Indem die Häckselmesser 18 somit jeweils nur punktuell schneiden, ist die Gefahr einer Blockade der Häckseltrommel 16 durch zu starke Zufuhr von Erntegut verringert.

Eine Vorrichtung 28 zur Überwachung der Schneidenschärfe der Häckselmesser 18 umfasst eine Lichtquelle 36, hier einen Laser 37, und eine Kamera 44. Der Laser 37 emittiert einen Strahl 38 in Richtung eines der Häckselmesser 18. Eine strahlformende Optik, hier eine Zylinderlinse 40, ist zwischen dem Laser 37 und dem Häckselmesser 18 angeordnet, um den Strahl 38 in einer Ebene aufzufächern, die das Häckselmesser 18 kreuzt. Der aufgefächerte Strahl 38 beleuchtet auf der Oberfläche des Häckselmessers 18 eine Referenzlinie 52, die die Schneide 48 des Häckselmessers 18 kreuzt. Die Kamera 44 ist angeordnet, um die Referenzlinie 52 unter einem nichtverschwindenden Winkel zu Ebene des aufgefächerten Strahls 38, typischerweise einem Winkel zwischen 45 und 135°, zu beobachten.

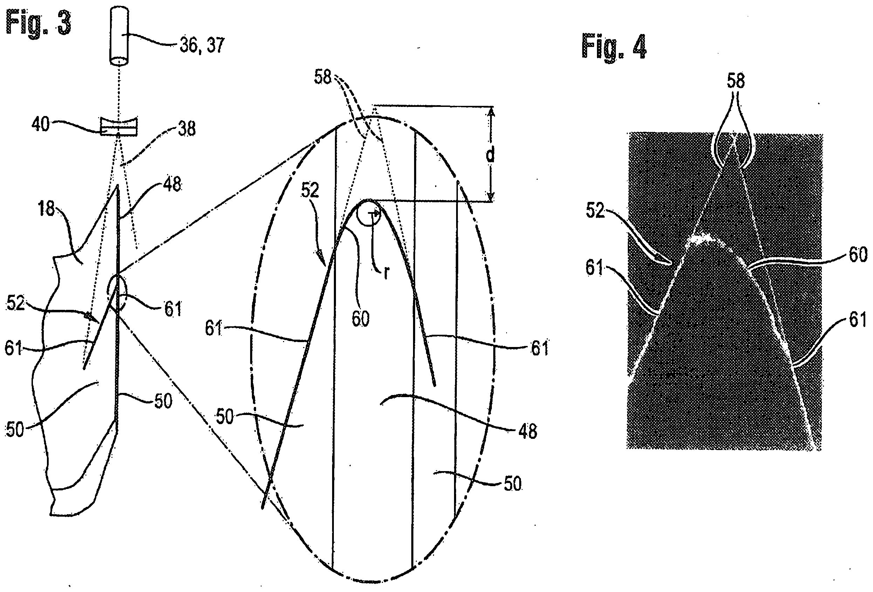

Fig. 3 zeigt in ihrem linken Teil das Häckselmesser 18 und die darauf projizierte Referenzlinie 52 aus dem Blickwinkel der Kamera 44. Aus dieser Richtung gesehen spiegelt der Verlauf der Referenzlinie 52 den Querschnitt des Häckselmessers 18 wider. Das Häckselmesser hat zwei ebene Flanken 50 beiderseits der Schneide 48, und auf beiden Flanken 50 erstreckt sich jeweils ein geradliniger Abschnitt 61 der Referenzlinie.

Der rechte Teil von Fig. 3 zeigt einen vergrößerten Ausschnitt des Häckselmessers 18 mit der Referenzlinie 52. Hier sieht man, dass die Schneide 48 eine nichtverschwindende Breite hat und dass die geradlinigen Abschnitte 61 einander nicht an der Schneide 48 spitzwinklig kreuzen, sondern durch einen bogenförmigen Abschnitt 60 verbunden sind.

Eine an die Kamera 44 angeschlossene Bildauswerteeinheit 62 (s. Fig. 2) ist vorgesehen, um anhand des Verlaufs der Referenzlinie 52, insbesondere von deren bogenförmigem Abschnitt 60, in den von der Kamera 44 gelieferten Bildern die Schärfe der Schneide 48 zu beurteilen.

Eine solche Schärfenbeurteilung kann z.B. die Berechnung des kleinsten Krümmungsradius r des bogenförmigen Abschnitts 60 beinhalten. Je kleiner der ermittelte Krümmungsradius r ist, umso schärfer ist die Schneide 48; wenn der kleinste Krümmungsradius r einen Grenzwert überschreitet, dann kann daraus geschlossen werden, dass die Schneide 48 stumpf ist und geschliffen werden muss.

Eine andere Möglichkeit ist, in der Bildauswerteeinheit 62 die geradlinigen Abschnitte 61 der Referenzlinie 52 linear bis zu einem Kreuzungspunkt zu extrapolieren, wie in Fig. 3 durch punktierte Linien 58 dargestellt, und den Abstand d zwischen dem Schnittpunkt der Linien 58 und dem Scheitel des bogenförmigen Abschnitts 60 oder den Abstand zwischen dem Schnittpunkt der Linien 58 und dem ihm nächstbenachbarten Punkt des Bogens 60 zu berechnen. Auch hier zeigt ein großer Wert des Abstands d eine stumpfe Schneide 48 an, so dass, wenn der Abstand d einen Grenzwert überschreitet, ein Nachschleifen zweckmäßig ist.

Die Referenzlinie 52 muss nicht vollständig im Blickfeld der Kamera 44 liegen; es genügt offensichtlich, wenn die Kamera 44 jeweils nur einen Teil der geradlinigen Abschnitte 61 zu sehen bekommt, der lang genug ist, um die Richtung der Abschnitte 61 bestimmen und extrapolieren zu können. Für die Berechung des kleinsten Krümmungsradius r genügt es sogar, wenn nur der Bogen 60 in den Bildern der Kamera 44 enthalten ist.

Fig. 4 zeigt zur Veranschaulichung ein reales, von der Kamera 44 geliefertes Bild. Eine kräftige, aber aufgrund der Abnutzung des Häckselmessers 18 ungleichmäßige helle Linie ist die vom Laser 37 auf das Messer 18 projizierte Referenzlinie 52. Die auf den Flanken 50 verlaufenden geradlinigen Abschnitte 61 sind deutlich von dem sie verbindenden Bogen 60 zu unterscheiden. Zwei dünne Linien 58 sind in Verlängerung der geradlinigen Abschnitte 61 von der Bildauswerteeinheit 62 hinzugefügt, um den Kreuzungspunkt zu bestimmen, von dem aus dann der Abstand d zum Bogen 60 ermittelt wird.

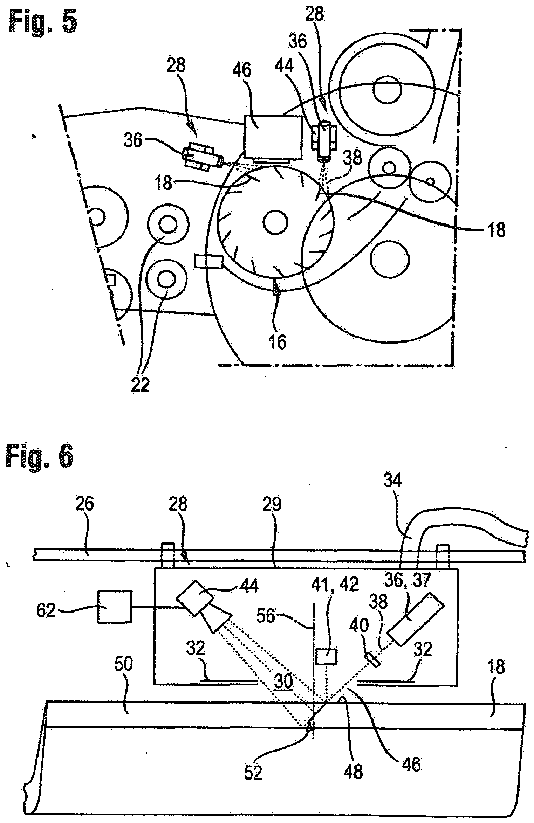

Fig. 5 zeigt Möglichkeiten der Anbringung der Schneidschärfenüberwachungsvorrichtung 28 im Feldhäcksler 1 anhand eines vergrößerten Ausschnitts aus Fig. 1. Generell sollten die Lichtquelle 36 und die Kamera 44 außerhalb des Weges des Häckselguts, d.h. an einer oberen Hälfte der Häckseltrommel 16, angeordnet sein, damit das Häckselgut nicht den Weg des Lichts blockiert und eine Messung verhindert. Da dort im Allgemeinen auch Platz für eine Schleifvorrichtung 46 zum Schärfen der Messer 18 benötigt wird, kann die einer Schneidschärfenüberwachungsvorrichtung 28 bezogen auf die Drehrichtung der Häckseltrommel 16 (im Gegenuhrzeigersinn in Fig. 5) an deren Umfang vor der Schleifvorrichtung 46 Platz finden, so dass die Lichtquelle 36 schräg von oben auf ein sich aufwärts bewegendes Häckselmesser 18 strahlt, oder sie kann über den Förderwalzen 22 platziert sein, so dass die Lichtquelle 36 schräg von vorn ein sich vorwärts bewegendes Häckselmesser 18 beleuchtet.

Einer in Fig. 6 gezeigten Ausgestaltung zufolge ist die Schneidschärfenüberwachungsvorrichtung 28 an einer sich parallel zur Drehachse 24 der Häckseltrommel 16 erstreckenden Schiene 26 verschiebbar gehalten. Die Lichtquelle 36, d.h. der Laser 37, die Zylinderlinse 40, die Kamera 28 und eine Triggereinrichtung 41, hier in Form eines Messersensors 42, sind in einem an der Schiene 26 geführten Gehäuse 29 untergebracht. Lichtquelle 36 und Kamera 44 können alternativ auch in getrennten Gehäusen untergebracht sein, doch sollten diese gemeinsam und in fester Position zueinander entlang der Schiene 36 verschiebbar sein, damit die Referenzlinie 52 immer im Blickfeld der Kamera 44 liegt.

An einer der Häckseltrommel 16 zugewandten Unterseite hat das Gehäuse 29 eine verschließbare Öffnung 30. In der Darstellung der Fig. 6 sind schematisch zwei Flügel 32 gezeigt, die, in nicht dargestellten Schienen parallel verschieblich geführt, vor der Öffnung 30 platzierbar sind, um diese, solange die Vorrichtung 28 nicht im Einsatz ist, dicht zu verschließen und das Innere des Gehäuses 29 vor dem Eindringen von Häckselgut, Funkenflug bei einem eventuellen Nachschleifen der Häckselmesser 18 und anderen Verunreinigungen zu schützen.

Das Verschließen der Öffnung 30 kann zum Schutz des Gehäuseinneren vor Verunreinigung ausreichen, wenn Schneidenschärfemessungen bei stehender Trommel 16 vorgenommen werden. Um Arbeitsunterbrechungen des Fahrzeugs zu minimieren, ist es jedoch bevorzugt, Schneidenschärfemessungen bei im Häckselbetrieb laufender Trommel 16 vorzunehmen. Um auch in diesem Fall ein Eindringen von Häckselgut in das Gehäuse 29 zu verhindern oder zu minimieren, ist das Gehäuse 29 über einen flexiblen Schlauch 34 mit einer Druckluftquelle verbunden. Wenn die Öffnung 30 zum Messen geöffnet ist, strömt die über den Schlauch 34 zugeführte Druckluft über sie aus dem Gehäuse 29 aus und hält so fliegendes Häckselgut vom Innern des Gehäuses 29 fern.

Die Zylinderlinse 40 und die Kamera 44 befinden sich auf verschiedenen Seiten einer gedachten, zur Schneide 48 senkrechten und durch den beleuchteten Oberflächenbereich 52 verlaufenden Ebene 56. Die Ausbreitungsebene des Strahls 38 und die Richtung, aus der die Kamera 44 auf die Schneide 48 blickt, spannen einen Winkel α von hier ca. 90° auf.

Wenn zum Untersuchen eines Häckselmessers 18 der Trommel 16 auf seine Schneidenschärfe die Drehung der Häckseltrommel 16 angehalten wird, dann kann die Vorrichtung 28 an dem betreffenden Häckselmesser 18 entlang der Schiene 26 verschoben werden, so dass die Lichtquelle an verschiedenen Stellen des Häckselmessers 18 die Referenzlinie 52 projiziert und die Kamera 44 Bilder der jeweils dort projizierten Referenzlinie 52 aufnimmt, anhand derer die Schärfe der Schneide 48 am jeweils beleuchteten Ort erfasst werden kann. Zweckmäßigerweise werden die so erfassten Werte vor dem Vergleich mit dem Grenzwert gemittelt, um zu verhindern, dass eine einzelne ungewöhnlich stark oder ungewöhnlich gering abgenutzte Stelle der Schneide 48 zur Grundlage der Entscheidung über ein Nachschleifen gemacht wird.

Die Bildauswerteeinheit 62 kann die Entscheidung über die Notwendigkeit des Nachschleifens unmittelbar anhand des ermittelten Werts der Schneidenschärfe treffen und nötigenfalls die Schleifvorrrichtung 46 in Gang setzen; es kann aber auch lediglich das Ergebnis der Messung an ein Anzeigeeinstrument 64 (siehe Fig. 1) in der Fahrerkabine des Feldhäckslers weitergegeben werden, um dem Fahrer die Entscheidung über das Nachschleifen anheimzustellen.

In der Praxis ist es bevorzugt, die Überwachung der Schneidenschärfe an der rotierenden Trommel 16 vorzunehmen. Eine dabei aus der Bewegung des Messers 18 resultierende Unschärfe der erzeugten Bilder kann begrenzt werden, indem eine ausreichend kurze Verschlusszeit der Kamera 44 (vorzugsweise nicht mehr als 5 µs bei einer Drehzahl der Häckseltrommel von 1200 U/min) verwendet wird und/oder indem die Lichtquelle 36 gepulst betrieben wird. Insbesondere wenn die Lichtquelle 36 wie oben erwähnt der Laser 37 ist, sind Pulsdauern in der Größenordnung von Mikrosekunden oder weniger problemlos realisierbar. Der Messersensor 42 ist eingerichtet, um den Durchgang eines Häckselmessers 18 durch einen gegebenen Punkt vor der Öffnung 30 des Gehäuses 29 zu erfassen und daraufhin die Kamera 44 zum Aufnehmen eines Bildes bzw., falls die Lichtquelle 36 gepulst arbeitet, die Erzeugung eines Lichtimpulses auszulösen. In der Ausgestaltung der Fig. 6 ist der Messersensor 42 angeordnet, um den Durchgang genau desjenigen Bereichs der Schneide 48 eines Häckselmessers 18 zu erfassen, auf dem dann von der Lichtquelle 36 die Referenzlinie 52 projiziert wird. So ist sichergestellt, dass die Referenzlinie 52 sich in den Bildern der Kamera 44 immer am gleichen Ort befindet, unabhängig davon, ob sich die Vorrichtung 28 an der linken oder der rechten Hälfte der Häckseltrommel 16 befindet und wie stark windschief ggf. die Häckselmesser 18 ausgerichtet sind. Alternativ könnten auch zwei Messersensoren 42 rechts und links von der in Fig. 3 gezeigten Position des Messersensors 42 vorgesehen sein, von denen der eine genutzt wird, während sich die Vorrichtung 28 an der linken Hälfte der Häckseltrommel 16 befindet und der andere genutzt wird, wenn sich die Vorrichtung an der rechten Hälfte befindet.

Denkbar wäre auch, einen unmittelbar an der Achse der Häckseltrommel 16 angeordneten Drehwinkelsensor als Triggereinrichtung 41 für die Bilderzeugung zu verwenden, wobei dann jedoch die Windschiefe der Häckselmesser 18 durch eine variable Verzögerung zwischen dem Triggersignal des Drehwinkelsensors und der Bilderzeugung in Abhängigkeit von der Position der Vorrichtung 28 entlang der Achse 24 berücksichtigt werden müsste.

Um eine Untersuchung der Schneidenschärfe an allen Messern 18 der Trommel 16 vorzunehmen, ist es zweckmäßig, bei rotierender Trommel 16 die Vorrichtung 28 kontinuierlich entlang der Schiene 26 über die gesamte Länge der Trommel 16 hinweg zu verschieben und dabei bei jedem Durchgang eines Messers 18 vor der Vorrichtung 28 ein Bild aufzunehmen. Da die abgebildeten Messer 18 in der Folge der von der Kamera 44 gelieferten Bilder periodisch wiederkehren, ist es möglich, in der Bildauswerteeinheit 62 die Bilder jeweils dem in ihnen abgebildeten Messer 18 zuzuordnen und anschließend anhand der Mehrzahl von für ein gegebenes Messer 18 erhaltenen Bilder die Schneidenschärfe dieses Messers zu beurteilen und die Entscheidung über die Notwendigkeit des Nachschleifens für jedes Messer einzeln zu fällen. Es kann aber auch auf eine Zuordnung der Bilder zu den einzelnen Messern 18 verzichtet werden und stattdessen ein Mittelwert über sämtliche aus den Bildern abgeleitete Schneidenschärfewerte berechnet und anhand dieses Mittelwerts eine einheitliche Entscheidung über das Nachschleifen für alle Messer 18 der Trommel 16 getroffen werden. So kann die Häufigkeit, mit der der Erntebetrieb zum Nachschleifen der Messer 18 unterbrochen werden muss, reduziert werden, was insgesamt einen effizienteren Erntebetrieb ermöglicht.

### Bezugszeichen

- 1: Feldhäcksler
- 4: Fahrwerk
- 6: Fahrzeugsrahmen
- 8: Aufnahmevorsatz
- 10: Häckselwerk
- 12: Nachbeschleuniger
- 14: Auswurfkrümmer
- 15: Motor
- 16: Häckseltrommel
- 18: Häckselmesser
- 20: Gegenschneide
- 22: Förderwalze
- 24: Drehachse
- 26: Schiene
- 28: Vorrichtung
- 29: Gehäuse
- 30: Öffnung
- 32: Flügel
- 34: Schlauch
- 36: Lichtquelle
- 37: Laser
- 38: Strahl
- 40: Zylinderlinse
- 41: Triggereinrichtung
- 42: Messersensor
- 44: Kamera
- 46: Schleifvorrichtung
- 48: Schneide
- 50: Flanke
- 51: Linie
- 52: Referenzlinie
- 56: Ebene
- 58: Schenkel
- 60: bogenförmiger Abschnitt
- 61: geradliniger Abschnitt
- 62: Bildauswerteeinheit
- 64: Anzeigeeinstrument

## Patentansprüche

1. Vorrichtung zur Überwachung der Schneidenschärfe eines Messers (18) mit einer Lichtquelle (36) zum Beleuchten des Messers (18) und einer Kamera (44) zum Aufnehmen von Bildern des Messers (18), **dadurch gekennzeichnet, dass** die Lichtquelle (36) eingerichtet ist, auf das Messer (18) wenigstens eine im Blickfeld der Kamera (44) die Schneide (48) des Messers (18) kreuzende Referenzlinie (52) zu projizieren, und die Referenzlinie (52) zur Generierung eines Maßes für die Schneidenschärfe ausgewertet wird.

2. Vorrichtung nach Anspruch 1, **dadurch gekennzeichnet, dass** die Referenzlinie (52) eine beiderseits von unbeleuchteten Bereichen flankierte beleuchtete Linie ist.

3. Vorrichtung nach Anspruch 2, **dadurch gekennzeichnet, dass** auf dem Weg des Lichts von der Lichtquelle (36) zum Messer ein zylindrisches optisches Element (40) oder ein rotierendes optisches Element angeordnet ist.

4. Vorrichtung nach einem der vorhergehenden Ansprüche, **dadurch gekennzeichnet, dass** die Lichtquelle (36) ein Laser (37) ist.

5. Vorrichtung nach einem der vorhergehenden Ansprüche, **dadurch gekennzeichnet, dass** die Lichtquelle (36) gepulst ist.

6. Vorrichtung nach einem der vorhergehenden Ansprüche, **dadurch gekennzeichnet, dass** das Messer (18) auf einer rotierenden Trommel (16) montiert ist und eine Triggereinrichtung (42) zum Synchronisieren des Betriebs der Kamera (44) und/oder der gepulsten Lichtquelle (36) funktionsmäßig an die Drehung der Trommel (16) gekoppelt ist.

7. Vorrichtung nach einem der vorhergehenden Ansprüche, **dadurch gekennzeichnet, dass** die Lichtquelle (36) und die Kamera (44) an einem entlang der Schneide (48) verfahrbaren Träger montiert sind.

8. Vorrichtung nach Anspruch 6 und Anspruch 7, **dadurch gekennzeichnet, dass** die Triggereinrichtung (42) an demselben Träger montiert ist.

9. Vorrichtung nach Anspruch 7 oder 8, **dadurch gekennzeichnet, dass** der gemeinsame Träger ein Gehäuse (29) ist, in dem die Lichtquelle (36) und die Kamera (44) aufgenommen sind.

10. Vorrichtung nach einem der vorhergehenden Ansprüche, **gekennzeichnet durch** ein bewegliches Verschlusselement (32), das zwischen Lichtquelle (36) und Messer (18) und/oder zwischen Kamera (44) und Messer (18) platzierbar ist.

11. Vorrichtung nach einem der vorhergehenden Ansprüche, **dadurch gekennzeichnet, dass** die Lichtquelle (36) und/oder die Kamera (44) in einem mit Druckgas beaufschlagbaren Gehäuse (29) untergebracht sind.

12. Vorrichtung nach einem der vorhergehenden Ansprüche, **dadurch gekennzeichnet, dass** die Einfallsrichtung des Lichts (46) auf die Schneide (48) und die Blickrichtung der Kamera (44) auf die Schneide einen Winkel (α) von wenigstens 45 und höchstens 135°, vorzugsweise zwischen 60 und 90°, aufspannen.

13. Verfahren zum Überwachen der Schneidenschärfe eines Messers (18) mit den Schritten:
Projizieren wenigstens einer Referenzlinie (52) auf das Messer (18), die die Schneide (48) des Messers (18) kreuzt,
Aufnehmen eines Bildes der Referenzlinie (52),
Abschätzen der Schneidenschärfe anhand der Gestalt der Referenzlinie (52) im aufgenommenen Bild.

## Claims

1. Apparatus for monitoring the sharpness of the cutting edge of a blade (18), having a light source (36) for illuminating the blade (18) and a camera (44) for producing images of the blade (18), **characterised in that** the light source (36) is adapted to project onto the blade (18) at least one reference line (52) which intersects the cutting edge (48) of the blade (18) in the field of vision of the camera (44), and this reference line (52) is analysed to generate an indication of the sharpness of the cutting edge.

2. Apparatus according to claim 1, **characterised in that** the reference line (52) is an illuminated line which is flanked on both sides by unilluminated regions.

3. Apparatus according to claim 2, **characterised in that** a cylindrical optical element (40) or a rotating optical element is arranged on the path of the light from the light source (36) to the blade.

4. Apparatus according to one of the preceding claims, **characterised in that** the light source (36) is a laser (37).

5. Apparatus according to one of the preceding claims, **characterised in that** the light source (36) is pulsed.

6. Apparatus according to one of the preceding claims, **characterised in that** the blade (18) is mounted on a rotating drum (16) and a triggering means (42) for synchronising the operation of the camera (44) and/or of the pulsed light source (36) is coupled for functional purposes with the rotation of the drum (16).

7. Apparatus according to one of the preceding claims, **characterised in that** the light source (36) and the camera (44) are mounted on a carrier displaceable along the cutting edge (48).

8. Apparatus according to claim 6 and claim 7, **characterised in that** the triggering means (42) is mounted on the same carrier.

9. Apparatus according to claim 7 or 8, **characterised in that** the shared carrier is a housing (29) in which the light source (36) and the camera (44) are received.

10. Apparatus according to one of the preceding claims, **characterised by** a movable occluding member (32) which is adapted to be placed between the light source (36) and the blade (18) and/or between the camera (44) and the blade (18).

11. Apparatus according to one of the preceding claims, **characterised in that** the light source (36) and/or the camera (44) is enclosed in a housing (29) which is adapted to have pressurised gas applied to it.

12. Apparatus according to one of the preceding claims, **characterised in that** the direction of incidence of the light (46) on the cutting edge (48) and the line of sight of the camera (44) on the cutting edge define an angle (α) of at least 45° and not more than 135°, and preferably of between 60 and 90°.

13. Method of monitoring the sharpness of the cutting edge of a blade (18), having the following steps:
projecting onto the blade (18) at least one reference line (52) which intersects the cutting edge (48) of the blade (18) ,
producing an image of the reference line (52), estimating the sharpness of the cutting edge from the form of the reference line (52) in the image which is produced.

## Revendications

1. Appareil destiné à surveiller l'affûtage du bord tranchant d'une lame (18), possédant une source lumineuse (36) pour illuminer la lame (18) et une caméra (44) pour produire des images de la lame (18), **caractérisé en ce que** la source lumineuse (36) est conçue de façon à projeter sur la lame (18) au moins une ligne de référence (52) laquelle est en intersection avec le bord tranchant (48) de la lame (18) dans le champ de vision de la caméra (44), et cette ligne de référence (52) est analysée afin de générer une indication de l'affûtage du bord tranchant.

2. Appareil selon la revendication 1, **caractérisé en ce que** la ligne de référence (52) est une ligne illuminée laquelle est flanquée, sur les deux côtés, par des régions non illuminées.

3. Appareil selon la revendication 2, **caractérisé en ce qu'**un élément optique cylindrique (40) ou un élément optique en rotation est agencé sur le trajet de la lumière allant de la source lumineuse (36) jusqu'à la lame.

4. Appareil selon l'une quelconque des revendications précédentes, **caractérisé en ce que** la source lumineuse (36) est un laser (37).

5. Appareil selon l'une quelconque des revendications précédentes, **caractérisé en ce que** la source lumineuse (36) est pulsée.

6. Appareil selon l'une quelconque des revendications précédentes, **caractérisé en ce que** la lame (18) est montée sur un tambour rotatif (16) et qu'un moyen de déclenchement (42) pour synchroniser le fonctionnement de la caméra (44) et / ou de la source lumineuse pulsée (36) est couplé, à des fins fonctionnelles, avec la rotation du tambour (16).

7. Appareil selon l'une quelconque des revendications précédentes, **caractérisé en ce que** la source lumineuse (36) et la caméra (44) sont montées sur un support apte à être déplacé le long du bord tranchant (48).

8. Appareil selon la revendication 6 et la revendication 7, **caractérisé en ce que** le moyen de déclenchement (42) est monté sur le même support.

9. Appareil selon la revendication 7 ou 8, **caractérisé en ce que** le support commun est un logement (29) dans lequel sont reçus la source lumineuse (36) et la caméra (44).

10. Appareil selon l'une quelconque des revendications précédentes, **caractérisé par** un élément d'occultation mobile (32) lequel est apte à être placé entre la source lumineuse (36) et la lame (18) et / ou entre la caméra (44) et la lame (18).

11. Appareil selon l'une quelconque des revendications précédentes, **caractérisé en ce que** la source lumineuse (36) et / ou la caméra (44) sont abrités dans un logement (29) apte à recevoir du gaz pressurisé.

12. Appareil selon l'une quelconque des revendications précédentes, **caractérisé en ce que** le sens d'incidence de la lumière (46) sur le bord tranchant (48) et la ligne de visée de la caméra (44) sur le bord tranchant définissent un angle (α) d'au moins 45° et ne dépassant pas 135°, et de préférence situé entre 60 et 90°.

13. Procédé de surveillance de l'affûtage du bord tranchant d'une lame (18), comprenant les étapes suivantes consistant à :
projeter sur la lame (18) au moins une ligne de référence (52) laquelle est en intersection avec le bord tranchant (48) de la lame (18),
produire une image de la ligne de référence (52),
évaluer l'affûtage du bord tranchant à partir de la forme de la ligne de référence (52) dans l'image ayant été produite.
